(19) Europäisches Patentamt
European Patent Office
Office européen des brevets

(11) **EP 2 827 414 A1**

(12) **EUROPEAN PATENT APPLICATION**
published in accordance with Art. 153(4) EPC

(43) Date of publication:
**21.01.2015 Bulletin 2015/04**

(21) Application number: **13761330.3**

(22) Date of filing: **08.03.2013**

(51) Int Cl.:
*H01M 4/587* (2010.01)    *C01B 31/02* (2006.01)
*C01B 31/04* (2006.01)    *H01M 4/36* (2006.01)

(86) International application number:
**PCT/JP2013/001524**

(87) International publication number:
**WO 2013/136747 (19.09.2013 Gazette 2013/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.03.2012 JP 2012059958**

(71) Applicant: **Sumitomo Bakelite Co., Ltd.**
**Shinagawa-ku**
**Tokyo 140-0002 (JP)**

(72) Inventors:
• **ITO, Hisashi**
  **Tokyo 140-0002 (JP)**
• **ICHIKAWA, Yuichi**
  **Tokyo 140-0002 (JP)**

(74) Representative: **Ter Meer Steinmeister & Partner**
**Patentanwälte mbB**
**Mauerkircherstrasse 45**
**81679 München (DE)**

(54) **CARBON MATERIAL FOR LITHIUM ION SECONDARY BATTERY, NEGATIVE ELECTRODE MATERIAL FOR LITHIUM ION SECONDARY BATTERY, AND LITHIUM ION SECONDARY BATTERY**

(57)    A carbon material for lithium ion secondary batteries of the invention contains amorphous carbon and graphite.

The amorphous carbon is deposited on a surface of the graphite, the amorphous carbon content is 55% by weight to 99% by weight, and the graphite content is 1% by weight to 45% by weight.

FIG. 2

10

EP 2 827 414 A1

**Description**

TECHNICAL FIELD

The present invention relates to a carbon material for lithium ion secondary batteries, a negative electrode material for lithium ion secondary batteries, and a lithium ion secondary battery.

BACKGROUND ART

In the related art, a carbon material has been used in the negative electrode of the lithium ion secondary batteries. This is because even when charge and discharge cycles are in progress, dendrite-like lithium is less likely to precipitate on the negative electrode formed by using the carbon material, and thus safety is guaranteed.
As the carbon material, amorphous carbon in which a graphite structure is not developed has been examined in consideration of high stability during repetition of charge and discharge and excellent input and output characteristics of a large current (for example, refer to Patent Document 1). However, the carbon material has a problem in that charge and discharge efficiency cannot be sufficiently obtained, a true density is low, and a capacity per volume is small.
In addition, graphite in which a crystal structure is developed has been examined in consideration of high charge and discharge efficiency (for example, refer to Patent Document 2). However, the graphite has a problem in that a decrease in a charge and discharge capacity occurs quickly during repetition of cycles, and the input and output characteristics of a large current are low.

RELATED DOCUMENT

PATENT DOCUMENT

[Patent Document 1] Japanese Laid-open patent publication No. 2006-083012
[Patent Document 2] Japanese Laid-open patent publication No. 5-74457

DISCLOSURE OF THE INVENTION

An object of the invention is to provide a carbon material for lithium ion secondary batteries, a negative electrode material for lithium ion secondary batteries, and a lithium ion secondary battery, which is capable of realizing a lithium ion secondary battery that has a high charge capacity and a high discharge capacity and is excellent in balance between input and output characteristics of a large current and charge and discharge efficiency.
The object is accomplished by the invention described in the following (1) to (7).

(1) According to an aspect of the invention, there is provided a carbon material for lithium ion secondary batteries which is used in the lithium ion secondary batteries. The carbon material contains amorphous carbon and graphite, the amorphous carbon is deposited on a surface of the graphite, the amorphous carbon content is 55% by weight to 99% by weight, and the graphite content is 1% by weight to 45% by weight.
(2) In the carbon material for lithium ion secondary batteries according to (1), the amorphous carbon may be obtained by carbonizing a resin or a resin composition.
(3) In the carbon material for lithium ion secondary batteries according to (2), the carbon material may be obtained by mixing the resin or the resin composition and the graphite and carbonizing the resultant mixture.
(4) In the carbon material for lithium ion secondary batteries according to (3), the graphite may be an assembly of flat particles, and the carbon material may be obtained by the carbonization in a state in which the resin or the resin composition penetrates between the flat particles of the graphite.
(5) In the carbon material for lithium ion secondary batteries according to any one of (1) to (4), a positron lifetime of the amorphous carbon, which is measured by a positron annihilation method under the following conditions (A) to (E), may be more than or equal to 370 picoseconds and less than or equal to 480 picoseconds,

(A) Positron source: Positron is generated from an electron and positron pair by using an electron accelerator,
(B) Gamma-ray detector: $BaF_2$ scintillator and photomultiplier tube,
(C) Measurement temperature and atmosphere: 25°C in vacuo,
(D) Annihilation $\gamma$-ray count number: $3 \times 10^6$ or more, and
(E) Positron beam energy: 10 keV, and

an intensity ratio (R=$I_{1360}$/$I_{1580}$) of a peak intensity ($I_{1360}$) near 1360 cm$^{-1}$ of a Raman spectrum observed by laser Raman spectroscopy to a peak intensity ($I_{1580}$) near 1580 cm$^{-1}$ of the Raman spectrum may be more than or equal to 0.80 and less than or equal to 1.20.

(6) According to another aspect of the invention, there is provided a negative electrode material for lithium ion secondary batteries. The negative electrode material includes the carbon material for lithium ion secondary batteries according to any one of (1) to (5).

(7) According to still another aspect of the invention, there is provided a lithium ion secondary battery. In the lithium ion secondary battery, the negative electrode material for lithium ion secondary batteries according to (6) is used.

According to the invention, it is possible to provide a carbon material for lithium ion secondary batteries, a negative electrode material for lithium ion secondary batteries, and a lithium ion secondary battery, which is capable of realizing a lithium ion secondary battery that has a high charge capacity and a high discharge capacity and is excellent in balance between the charge capacity, the discharge capacity, and charge and discharge efficiency.

BRIEF DESCRIPTION OF THE DRAWINGS

The above and other objects, features and advantages of the present invention will be more apparent from the following description of certain preferred embodiments taken in conjunction with the accompanying drawings.

FIG. 1 is a diagram illustrating a relationship between an annihilation $\gamma$-ray count number and a positron annihilation time.
FIG. 2 is a schematic diagram of a lithium ion secondary battery.

DESCRIPTION OF EMBODIMENTS

Hereinafter, an embodiment of the invention will be described with reference to the attached drawings. In addition, in all of the drawings, a common reference numeral is given to the same constituent elements, and a description thereof will not be repeated. In addition, the drawings are schematic drawings, and a dimensional ratio in the drawing may not necessarily equal to an actual dimensional ratio.

«Carbon Material for Lithium Ion Secondary Batteries»

First, a carbon material for lithium ion secondary batteries (hereinafter, may be referred to as a carbon material) of the invention will be described.
The carbon material for lithium ion secondary batteries of the invention contains amorphous carbon and graphite, and the amorphous carbon is deposited on a surface of the graphite.
However, in the related art, as the carbon material, amorphous carbon in which a graphite structure is not developed has been examined in consideration of high stability during repetition of charge and discharge and excellent input and output characteristics of a large current. In addition, these physical properties are provided, but an irreversible capacity is large, and thus the carbon material shows a tendency that it is difficult to realize high charge and discharge efficiency.
In addition, graphite in which a crystal structure is developed has been examined in consideration of high charge and discharge efficiency. However, the graphite shows a tendency that a decrease in a charge and discharge capacity occurs quickly during repetition of cycles, and the input and output characteristics of a large current are low.
In contrast, in the invention, a material, which is obtained by adding graphite in amorphous carbon as a main material, is used as the carbon material for lithium ion secondary batteries. Accordingly, the charge and discharge efficiency is raised while retaining the stability during cycles and the input and output characteristics of a large current to a certain degree that is substantially the same as that of the amorphous carbon elementary substance, and thus a charge and discharge capacity per volume can be improved. As a result, it is possible to obtain a lithium ion secondary battery excellent in balance between a charge capacity, a discharge capacity, and the charge and discharge efficiency.
Hereinafter, respective components will be described in detail.

[Amorphous Carbon]

The amorphous carbon represents an amorphous material as a carbon material such as hard carbon (non-graphitizable carbon) and soft carbon (easy-graphitizable carbon) which are obtained by carbonizing a resin or a resin composition and in which a graphite crystal structure is not developed.

The amorphous carbon has high stability during cycles, and thus input and output of a large current is allowed to easily occur. On the other hand, in a case of using a carbon material constituted by amorphous carbon as a negative electrode, there is a tendency that it is difficult to realize the high charge and discharge efficiency.

In contrast, in the carbon material for lithium ion secondary batteries of the invention, graphite having the following characteristics is added to amorphous carbon as a main material, and thus it is possible to realize excellent charge and discharge efficiency while retaining stability during cycles, and excellent input and output characteristics of a large current.

It is preferable that the amorphous carbon content be 55% by weight to 99% by weight, more preferably 60% by weight to 98% by weight, and still more preferably 70% by weight to 96% by weight. According to this, it is possible to realize high charge and discharge efficiency in a more effective manner without deteriorating the excellent stability during cycles and the input and output characteristics of a large current.

Particularly, when the amorphous carbon content is set to A [% by weight] and the graphite content is set to B [% by weight], it is preferable to satisfy a relationship of $1.2 \leq A/B \leq 100$, more preferably a relationship of $1.5 \leq A/B \leq 50$, and still more preferably a relationship of $2 \leq A/B \leq 25$. When satisfying the relationship, it is possible to realize high charge and discharge efficiency in a more effective manner without deteriorating the excellent stability during cycles and the input and output characteristics of a large current.

It is preferable that the amorphous carbon of the invention be obtained by carbonizing a resin or a resin composition. When the carbonization is performed, the resin or the resin composition is carbonized, and thus it is possible to use the resin or the resin composition as a carbon material for lithium ion secondary batteries. The resin or a resin included in the resin composition, which becomes a raw material of the amorphous carbon, is not particularly limited, and examples thereof include a thermosetting resin; a thermoplastic resin; petroleum-based or coal-based tar or pitch such as petroleum-based tar or pitch that is generated as a byproduct during production of ethylene, coal tar that is generated during coal carbonization, a heavy component or pitch obtained by removing a low-boiling-point-component of coal tar by distillation, and tar or pitch that is obtained by liquefaction of coal; a material obtained by cross-linking the tar, the pitch, and the like; and the like. Among these, one kind thereof may be used alone, or two or more kinds thereof may be used in combination.

In addition, as described later, the resin composition may contain a curing agent, an additive, and the like in combination with the resin as a main component. In addition, a cross-linking treatment by oxidation and the like may be appropriately performed.

The thermosetting resin is not particularly limited, and examples thereof include a phenolic resin such as a novolac-type phenolic resin and a resol-type phenolic resin; an epoxy resin such as bisphenol-type epoxy resin and a novolac-type epoxy resin; a melamine resin; a urea resin; an aniline resin; a cyanate resin; a furan resin; a ketone resin; an unsaturated polyester resin; a urethane resin; and the like. In addition, modified products obtained by modifying these resins with various components may be used.

In addition, the thermoplastic resin is not particularly limited, and examples thereof include polyethylene, polystyrene, polyacrylonitrile, an acrylonitrile-styrene (AS) resin, an acrylonitrile-butadiene-styrene (ABS) resin, polypropylene, polyvinyl chloride, a methacrylic resin, polyethylene terephthalate, polyamide, polycarbonate, polyacetal, polyphenylene ether, polybutylene terephthalate, polyphenylene sulfide, polysulfone, polyether sulfone, polyether ether ketone, polyether imide, polyamide imide, polyimide, polyphthalamide, and the like.

Particularly, as a resin that is used in the amorphous carbon as a main component, the thermosetting resins are preferable. According to this, an actual carbon ratio of the amorphous carbon may be raised. When the actual carbon ration of the amorphous carbon is raised, it is possible to prepare the amorphous carbon at a low cost.

Particularly, among the thermosetting resins, a resin, which is selected from a group consisting of the novolac-type phenolic resin, the resol-type phenolic resin, the melamine resin, the furan resin, the aniline resin, and modified products of these resins, is preferable. According to this, the degree of freedom in design of the carbon material is expanded, and thus the carbon material can be produced at a low cost. Furthermore, it is possible to realize further higher stability during cycles and input and output characteristics of a large current.

In addition, in a case of using the thermosetting resin, a curing agent thereof may be used in combination.

The curing agent that is used is not particularly limited, and in a case of the novolac-type phenolic resin, for example, hexamethylenetetramine, resol-type phenolic resin, polyacetal, paraformaldehyde, and the like may be used. In addition, in a case of the epoxy resin, a curing agent that is known in an epoxy resin, for example, a polyamine compound such as aliphatic polyamine and aromatic polyamine; an acid anhydride; an imidazole compound; dicyandiamide; a novolac-type phenolic resin; a bisphenol-type phenolic resin; a resol-type phenolic resin; and the like may be used.

In addition, even in a case of a thermosetting resin that typically uses a predetermined amount of a curing agent in combination, in the resin composition that is used in this embodiment, the curing agent may be used in an amount less than that of a typical case, or the thermosetting resin may be used without using the curing agent in combination.

In addition, in the resin composition as a raw material of the amorphous carbon, an additive may be blended in addition to the components.

The additive that is used herein is not particularly limited, but examples thereof include a carbon material precursor that is carbonized at 200°C to 800°C, an organic acid, an inorganic acid, a nitrogen-containing compound, an oxygen-containing compound, an aromatic compound, a nonferrous metal element, and the like. These additives may be used alone or in combination of two or more kinds thereof in accordance with a kind or characteristics of the resin that is used, and the like.

The resin or the resin composition that is used as a raw material of the amorphous carbon may contain nitrogen-containing resins to be described later as a main component resin. In addition, in a case where the nitrogen-containing resins are not contained as the main component resin, at least one or more kinds of nitrogen-containing compounds may be contained as a component other than the main component resin. The resin or the resin compound may contain the nitrogen-containing resins as a main component resin and the nitrogen-containing compound as a component other than the main component resin. When the resin is carbonized, nitrogen-containing amorphous carbon can be obtained. When nitrogen is contained in the amorphous carbon, it is possible to apply electrical characteristics suitable for the amorphous carbon (carbon material for lithium ion secondary batteries) in accordance with an electronegativity of nitrogen. According to this, intercalation and deintercalation of lithium ions are promoted, and thus it is possible to apply high charge and discharge characteristics.

Here, as the nitrogen-containing resins, the following resins may be exemplified.

Examples of a thermosetting resin include a phenolic resin, an epoxy resin, and the like which are modified with a nitrogen-containing component such as amine, and the like in addition to a melamine resin, a urea resin, an aniline resin, a cyanate resin, and a urethane resin.

Examples of a thermoplastic resin include polyacrylonitrile, an acrylonitrile-styrene (AS) resin, an acrylonitrile-butadiene-styrene (ABS) resin, polyamide, polyether imide, polyamide imide, polyimide, polyphthalamide, and the like.

In addition, as the resin other than the nitrogen-containing resins, the following resins may be exemplified.

Examples of a thermosetting resin include a phenolic resin, an epoxy resin, a furan resin, an unsaturated polyester resin, and the like.

Examples of a thermoplastic resin include polyethylene, polystyrene, polypropylene, polyvinyl chloride, a methacrylic resin, polyethylene terephthalate, polycarbonate, polyacetal, polyphenylene ether, polybutylene terephthalate, polyphenylene sulfide, polysulfone, polyether sulfone, polyether ether ketone, and the like.

In addition, in a case of using the nitrogen-containing compound as a component other than the main component resin, a kind thereof is not particularly limited, but a nitrogen-containing compound such as an amine compound, an ammonium salt, nitrate, and a nitro compound which do not function as a curing agent other than a curing agent component may be used in addition to hexamethylene tetramine that is a curing agent of a novolac-type phenolic resin, aliphatic polyamine, aromatic polyamine, dicyandiamide, that is a curing agent of an epoxy resin, and the like.

As the nitrogen-containing compound, even when containing or not containing the nitrogen-containing resins in the main component resin, one kind may be used alone or two or more kinds may be used in combination.

The nitrogen content in the resin composition or the resin which is used as a raw material of the amorphous carbon is not particularly limited, but it is preferable that the nitrogen content be 5% by weight to 65% by weight, and more preferably 10% by weight to 20% by weight.

In the amorphous carbon that is obtained by performing carbonization of the resin composition or the resin, it is preferable that the carbon atom content be 95% by weight or more, and the nitrogen atom content be more than or equal to 0.5% by weight and less than or equal to 5% by weight.

As described above, when nitrogen atoms are contained in a content of 0.5% by weight or more, particularly, in a content of 1.0% by weight or more, it is possible to apply electrical characteristics suitable for the amorphous carbon in accordance with the electronegativity of nitrogen. According to this, intercalation and deintercalation of lithium ions are promoted, and thus it is possible to apply high charge and discharge characteristics.

In addition, when the nitrogen atom content is set to 5% by weight or less, particularly, 3% by weight or less, the electrical characteristics applied to the amorphous carbon are suppressed from becoming excessively stronger, and thus electrical adsorption of the lithium ions, which are intercalated, with nitrogen atoms is prevented. According to this, an increase in an irreversible capacity is suppressed, and it is possible to obtain high charge and discharge characteristics.

The nitrogen content in the amorphous carbon may be adjusted by appropriately setting carbonization conditions of the resin composition or the resin, or in a case of performing a curing treatment or pre-carbonization before the carbonization, by appropriately setting conditions thereof in addition to the nitrogen content in the resin composition or the resin.

For example, examples of a method of obtaining the carbon material in which the nitrogen content is set as described above include a method of adjusting conditions during carbonation, particularly, a final temperature in a state of setting the nitrogen content in the resin composition or the resin to a predetermined value.

A method of preparing the resin composition that is used as a raw material of the amorphous carbon is not particularly limited, and examples of the method include a method in which the main component resin and other components are blended in a predetermined ratio, and then these are melted and mixed, a method in which these components are dissolved in a solvent and are mixed, a method in which these components are pulverized and are mixed, and the like.

In this embodiment, the nitrogen content is measured by a thermal conductivity method.

The thermal conductivity method is a method in which a measurement sample is converted into simple gases ($CO_2$, $H_2O$, and $N_2$) by using a combustion method, and then the gasified sample is made to pass through a column after homogenization. According to this, these gases are separated step by step, and thus the carbon content, the hydrogen content, and the nitrogen content can be measured from respective thermal conductivities.

In addition, in this embodiment, the measurement is performed by using an element analysis and measurement device "PE2400" manufactured by Perkinelmer Co., Ltd.

In addition, with regard to the amorphous carbon in this embodiment, it is preferable that a positron lifetime measured by a positron annihilation method be more than or equal to 370 picoseconds and less than or equal to 480 picoseconds, and more preferably more than or equal to 380 picoseconds and less than or equal to 460 picoseconds.

In a case where the positron lifetime measured by the positron annihilation method is more than or equal to 370 picoseconds and less than or equal to 480 picoseconds, it can be said that a void having a size at which entrance and exit of lithium easily occur is formed in the amorphous carbon as described later, and thus it is possible to further raise a charge capacity and a discharge capacity of the carbon material for lithium ion secondary batteries.

In addition, measurement of the positron lifetime according to the positron annihilation method is performed under the following conditions.

(A) Positron source: Positron is generated from an electron and positron pair by using an electron accelerator
(B) Gamma-ray detector: $BaF_2$ scintillator and photomultiplier tube
(C) Measurement temperature and atmosphere: 25°C in vacuo
(D) Annihilation $\gamma$-ray count number: $3 \times 10^6$ or more
(E) Positron beam energy: 10 keV

Here, a relationship between the positron lifetime and the void size will be described.

The positron annihilation method is a method of counting a time taken until annihilation occurs after a positron ($e^+$) is incident to a sample and of measuring the void size.

The positron is antimatter of an electron, and has the same rest mass as the electron. However, a charge is positive.

It is known that after being incident to a material, the positron forms a pair with the electron (positron-electron pair (positronium)), and annihilates. When the positron is thrown to the carbon material, the positron ($e^+$) is coupled to one of the electrons that are knocked out from the carbon material and forms positronium. The positronium is trapped by a portion in the carbon material in which an electron density is low, that is, a local void in the carbon material, overlaps with an electron cloud emitted from a void wall, and annihilates. In a case where the positronium is present in the void inside the carbon material, the size of the void and the annihilation lifetime of the positronium are inversely proportional to each other. That is, when the void is small, overlapping between the positronium and an ambient electron increases, and thus the positron annihilation lifetime is shortened. On the other hand, when the void is large, a probability in which the positronium overlaps with another electron discharged from a void wall and annihilates decreases, and thus the annihilation lifetime of the positronium is lengthened. Accordingly, the size of the void inside the carbon material can be evaluated by measuring the annihilation lifetime of the positronium.

As described above, the positron, which is incident to the carbon material, forms positronium with an electron after losing energy and annihilates. At this time, $\gamma$-rays are emitted from the carbon material.

Accordingly, the emitted $\gamma$-rays serve as a measurement termination signal.

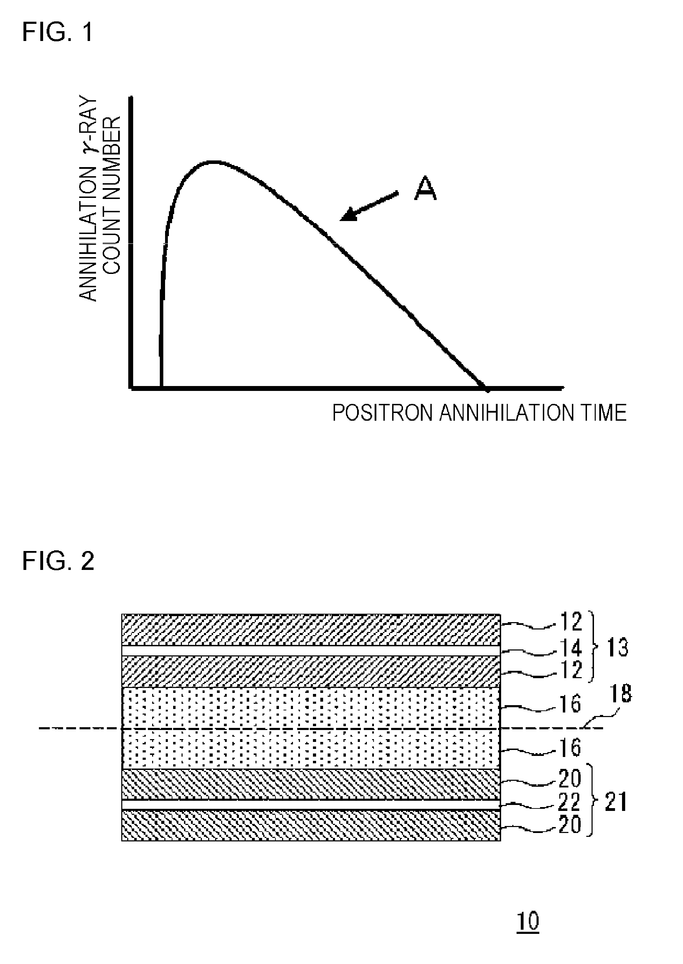

When measuring the positron annihilation lifetime, an electron accelerator as a positron source or radioactive isotope $^{22}Na$ as a general-purpose one is frequently used. When $\beta^+$-collapsing into $^{22}Ne$, $^{22}Na$ simultaneously emits a positron and $\gamma$-ray of 1.28 MeV. The positron, which is incident to the carbon material, emits $\gamma$-ray of 511 keV through an annihilation process. Accordingly, when the $\gamma$-ray of 1.28 MeV is set as a start signal and the $\gamma$-ray of 511 keV is set as a termination signal, the positron annihilation lifetime can be obtained by measuring a time difference between the signals. Specifically, a positron lifetime spectrum shown in FIG. 1 is obtained. An inclination A of the positron lifetime spectrum represents the positron lifetime, and thus it is possible to grasp the positron lifetime of the carbon material from the positron lifetime spectrum.

In addition, in a case of using an electron accelerator as a positron source, generation of an electron and positron pair is caused by Bremsstrahlung X-rays that are generated by irradiating a tantalum or tungsten target with electron beams, thereby generating a positron. In the case of the electron accelerator, measurement is performed under the following conditions. Specifically, a point of time at which a positron beam is incident to a sample is set as a measurement start point (corresponding to the start signal in $^{22}Na$), and a termination signal is set in the same principle as $^{22}Na$.

When the positron lifetime measured by the positron annihilation method is less than 370 picoseconds, the void size is too small, and thus intercalation and deintercalation of lithium ions are less likely to occur. In addition, when the positron lifetime measured by the positron annihilation method exceeds 480 picoseconds, an intercalation amount of lithium increases, but it is assumed that deintercalation of lithium is less likely to occur due to an increase in electrostatic capacity in accordance with the intrusion of other materials such as an electrolytic solution.

In addition, in the amorphous carbon that is used in the invention, it is preferable that an intensity ratio ($R=I_{1360}/I_{1580}$) of a peak intensity ($I_{1360}$) near 1360 cm$^{-1}$ of a Raman spectrum observed by laser Raman spectroscopy to a peak intensity ($I_{1580}$) near 1580 cm$^{-1}$ of the Raman spectrum be more than or equal to 0.80 and less than or equal to 1.20, and more preferably more than or equal to 0.85 and less than or equal to 1.1.

The intensity ratio ($R=I_{1360}/I_{1580}$) of the Raman spectrum can be substituted with crystallinity. When the intensity ratio R is more than or equal to 0.80 and less than or equal to 1.20, it can be said that material crystallinity is appropriately controlled as described below, and thus it is possible to obtain a carbon material having high charge and discharge efficiency due to suppression of an irreversible capacity on a material surface.

Next, the crystallinity of the carbon material is evaluated by a Raman spectrum obtained by using an argon laser.

That is, the material crystallinity is obtained by measuring a Raman spectrum near 1580 cm$^{-1}$ which corresponds to oscillation in a hexagonal lattice which is derived from a graphite crystalline structure, and a Raman spectrum near 1360 cm$^{-1}$ which corresponds to oscillation derived from a non-crystalline turbulent layer structure such as a crystal defect mainly on a surface layer and lamination irregularity by a laser Raman spectroscopic analyzer using the argon laser having a wavelength of 514.5 nm, and by calculating the peak intensity ratio ($R=I_{1360}/I_{1580}$). The intensity ratio R is evaluated as follows. As the value thereof is small, the crystallinity is high, and as the value thereof is large, the crystallinity is low.

When developing a carbon material in which the intensity ratio R is more than or equal to 0.80 and less than or equal to 1.20, it is possible to obtain amorphous carbon into which lithium ions tend to be diffused and in which the irreversible capacity is small and the charge and discharge efficiency is high.

In addition, in the amorphous carbon, an average interplanar spacing $d_{002}$ of a (002) plane, which is calculated by a wide-angle X-ray diffraction method by using Bragg's equation, is preferably more than or equal to 3.4 Å and less than or equal to 3.9 Å. In a case where the average interplanar spacing $d_{002}$ is 3.4 Å or more, particularly, 3.6 A or more, shrinkage and expansion between layers in accordance with intercalation of lithium ions are less likely to occur, and thus it is possible to suppress a decrease in charge and discharge cycle characteristics.

On the other hand, when the average interplanar spacing $d_{002}$ is 3.9 Å or less, particularly, 3.8 Å or less, the intercalation and deintercalation of the lithium ions are smoothly performed, and thus it is possible to suppress a decrease in the charge and discharge efficiency.

Here, the average interplanar spacing d of the amorphous carbon is calculated from a spectrum, which is obtained from X-ray diffraction measurement, by the following Bragg's equation.

$$\lambda=2d_{hkl}\sin\theta \text{ (Bragg's equation)}(d_{hkl}=d_{002})$$

λ: Wavelength of characteristic X-ray Kα1 output from a negative electrode

θ: Reflection angle of a spectrum

In addition, in the amorphous carbon, it is preferable that the size Lc of a crystallite in a c-axis direction (direction perpendicular to a (002) plane) be more than or equal to 8 Å and less than or equal to 50 Å.

When Lc is set to 8 Å or more, particularly, 9 Å or more, a space between carbon layers in which intercalation and deintercalation of lithium ions can be performed is formed, and thus there is an effect of obtaining sufficient charge and discharge capacity. When Lc is set to 50 Å or less, particularly, 15 Å or less, collapsing of a carbon lamination structure due to intercalation and deintercalation of lithium ions, or reductive decomposition of an electrolytic solution is suppressed, and thus there is an effect of suppressing a decrease in the charge and discharge efficiency and the charge and discharge cycle characteristics.

Lc is calculated as follows.

Lc is determined from a diffraction angle and a full width at half maximum of a 002 plane peak in a spectrum obtained from X-ray diffraction measurement by using the following Scherrer's equation.

$$Lc=0.94\lambda/(\beta\cos\theta) \text{ (Scherrer's equation)}$$

Lc: Size of a crystallite
$\lambda$: Wavelength of characteristic X-ray K$\alpha$1 output from a negative electrode
$\beta$: Full width at half maximum (radian) of a peak
$\theta$: Reflection angle of a spectrum

The X-ray diffraction spectrum in the amorphous carbon is measured by an X-ray diffraction device "XRD-7000" manufactured by Shimadzu Corporation.

In addition, in the amorphous carbon, it is preferable that a specific surface area according to a BET three-point method in nitrogen adsorption be more than or equal to 1 $m^2$/g and less than or equal to 15 $m^2$/g.

When the specific surface area according to the BET three-point method in nitrogen adsorption is 15 $m^2$/g or less, reaction between the carbon material and the electrolytic solution can be suppressed.

In addition, when the specific surface area according to the BET three-point method in nitrogen adsorption is 1 $m^2$/g or more, there is an effect of obtaining appropriate permeability of the electrolytic solution with respect to the carbon material.

A method of calculating the specific surface area is as follows.

A monomolecular adsorption amount $W_m$ is calculated by the following Expression (1), and a total surface area $S_{total}$ is calculated by the following Expression (2), thereby obtaining a specific surface area S by the following Expression (3).

$$1/[W\{(P_o/P)-1\}] = \{(C-1)/(W_mC)\}(P/P_o)(1/(W_mC) \quad (1)$$

In Expression (1), P represents a gas pressure of an adsorbate in adsorption equilibrium, $P_o$ represents a saturated vapor pressure of the adsorbate at an adsorption temperature, W represents an adsorption amount at an adsorption equilibrium pressure P, $W_m$ represents a monomolecular adsorption amount, and C represents a constant relating to the magnitude of interaction between a solid surface and the adsorbate ($C=exp\{(E_1-E_2)RT)[E_1$: adsorption heat (kJ/mol) of a first layer, $E_2$: liquefaction heat (kJ/mol) at a measurement temperature of the adsorbate].

$$S_{total} = (W_mNA_{cs})M \quad (2)$$

In Expression (2), N represents Avogadro's number, M represents a molecular weight, and $A_{cs}$ represents an adsorption cross-sectional area.

$$S = S_{total}/w \quad (3)$$

In Expression (3), w represents a weight (g) of a sample.

The above-described amorphous carbon can be prepared as described below in a representative example of a resin or a resin composition.

First, a resin or a resin composition to be carbonized is prepared.

A device of preparing the resin composition is not particularly limited. However, for example, in a case of performing melting and mixing, a kneading device such as a kneading roll, and a mono-axial or bi-axial kneader may be used. In addition, in a case of performing dissolution and mixing, a mixing device such as a Henschel mixer and a disperser may be used. In addition, in a case of performing crushing and mixing, for example, a device such as a hammer mill and a jet mill may be used.

The resin composition, which is obtained in this manner, may be a resin composition obtained by only physically mixing a plurality of kinds of components, or a resin composition in which a part thereof is subjected to a chemical reaction by mechanical energy applied at the time of performing mixing (stirring, kneading, and the like) during preparation of the resin composition or by heat energy converted from the mechanical energy. Specifically, the resin composition may be subjected to a mechanochemical reaction by the mechanical energy or a chemical reaction by the heat energy.

In addition, it is preferable to mix graphite to be described later with the resin or resin composition and to carbonize the resultant mixture, and in this case, the mixing can be performed by the same method as described above.

The amorphous carbon is obtained by carbonizing the above-described resin composition or resin.

Here, carbonization conditions are not particularly limited, and for example, the carbonization can be performed by raising a temperature from room temperature at a rate of 1 °C/hour to 200°C/hour, and by performing retention at 800°C to 3000°C for 0.1 hours to 50 hours, preferably, for 0.5 hours to 10 hours. With regard to an atmosphere during the carbonization, it is preferable to perform the carbonization under an inert atmosphere such as nitrogen gas and helium gas, a substantially inert atmosphere in which a slight amount of oxygen is present in an inert gas, or a reducing gas atmosphere. When performing the carbonization in this manner, thermal decomposition (oxidative decomposition) of the resin is suppressed, and thus a desired carbon material can be obtained.

Conditions such as temperature and time during the carbonization may be appropriately adjusted to realize optimal characteristics of the amorphous carbon.

In addition, pre-carbonization may be performed before performing the carbonization.

Here, conditions of the pre-carbonization are not particularly limited, and for example, the pre-carbonization may be performed at 200°C to 600°C for 1 hour to 10 hours. In this manner, when the pre-carbonization is performed before the carbonization, the resin composition, the resin, and the like are made to be infusible. Accordingly, even when performing a process of pulverizing the resin composition, the resin, and the like before a carbonization process, the resin composition, the resin, and the like after pulverization are prevented from being fused again during the carbonization, thereby efficiently obtaining a desired carbon material.

At this time, as an example of a method of obtaining the amorphous carbon in which the positron lifetime measured by the positron annihilation method is more than or equal to 370 picoseconds and less than or equal to 480 picoseconds, a method of performing the pre-carbonization in a state in which a reducing gas and an inert gas are not present may be exemplified.

In addition, in a case of using a thermosetting resin or a polymerizable high-molecular compound as the resin for preparation of the amorphous carbon, a curing treatment of the resin composition or the resin may be performed before the pre-carbonization.

A curing treatment method is not particularly limited, and for example, the curing treatment may be performed by a thermal curing method in which heat is applied in a quantity capable of allowing a curing reaction to occur in the resin composition, a method in which a resin and a curing agent are used in combination, and the like. According to this, the pre-carbonization is possible in a substantially solid phase, and thus the carbonization or the pre-carbonization can be performed in a state in which a structure of the resin is retained to a certain degree. As a result, it is possible to control the structure or characteristics of the amorphous carbon.

In addition, in a case of performing the carbonization or the pre-carbonization, a metal, a pigment, a lubricant, an antistatic agent, an antioxidant, and the like may be added to the resin composition to apply a desired characteristic to the carbon material.

In a case of performing the curing treatment and/or the pre-carbonization, a material to be subsequently processed may be pulverized before the carbonization. In this case, a variance in a thermal history during the carbonization is reduced, and thus uniformity in a surface state of the amorphous carbon may be increased. In addition, it is possible to realize satisfactory handleability of the material to be processed.

In addition, when performing the curing treatment and/or the pre-carbonization, it is assumed that excessive development of a crystal structure is blocked and thus it is possible to obtain amorphous carbon in which the intensity ratio ($R=I_{1360}/I_{1580}$)) of the Raman spectrum is more than or equal to 0.80 and less than or equal to 1.20.

In addition, for example, according to necessity, natural cooling may be performed to 800°C to 500°C in the presence of a reducing gas or an inert gas after the carbonization, and then cooling may be performed to 100°C or lower at a rate of 100°C/hour so as to obtain the amorphous carbon in which the positron lifetime measured by the positron annihilation method is more than or equal to 370 picoseconds and less than or equal to 480 picoseconds.

When performing the cooling in this manner, it is assumed that cracking in the amorphous carbon due to rapid cooling is suppressed and a void that is formed can be retained, and thus it is possible to obtain the amorphous carbon in which the positron lifetime measured by the positron annihilation method is more than or equal to 370 picoseconds and less than or equal to 480 picoseconds.

[Graphite]

Graphite is one of the allotropes of carbon and is a hexagonal plate-like crystal material which belongs to a hexagonal system, and which forms a layer-like lattice constituted by a layer in which six-carbocyclic rings are connected.

In a case of using graphite as the carbon material for lithium ion secondary batteries, a decrease in a charge and discharge capacity occurs quickly during repetition of cycles. In addition, in a lithium ion secondary battery using graphite, low input and output characteristics of a large current are low, but this lithium ion secondary battery has an advantage that charge and discharge efficiency is excellent.

When adding graphite to the amorphous carbon in which stability during cycles is high and to and from which input and output of a large current is allowed to easily occur, it is possible to improve the charge and discharge efficiency while realizing high stability during cycles and high input and output characteristics of a large current.

In the carbon material for lithium ion secondary batteries, it is preferable that the graphite content be 1% by weight to 45% by weight, more preferably 2% by weight to 40% by weight, and still more preferably 4% by weight to 30% by weight. When the graphite content is in the above-described range, it is possible to improve charge and discharge efficiency while realizing high stability during cycles and excellent input and output characteristics of a large current. In contrast, when the graphite content is less than the lower limit, the effect of sufficiently improving the charge and discharge efficiency cannot be obtained. On the other hand, when the graphite content exceeds the upper limit, the stability during cycles and the input and output characteristics of a large current are not sufficient.

The carbon material for lithium ion secondary batteries of the invention contains the above-described amorphous carbon as a main material, and the graphite in combination. However, a part of the amorphous carbon and graphite may be subjected to a chemical reaction by mechanical energy applied at the time of mixing (stirring, kneading, and the like) during preparation of the amorphous carbon and the graphite or by heat energy converted from the mechanical energy. Specifically, the amorphous carbon and the graphite may be subjected to a mechanochemical reaction by the mechanical energy or a chemical reaction by the heat energy. In addition, the graphite is mixed with the resin or the resin composition, and the resultant mixture is carbonized, whereby the amorphous carbon and the graphite are deposited on each other.

The carbon material, in which the graphite is mixed with the resin or the resin composition and then the resultant mixture is carbonized, and thus the amorphous carbon and the graphite are deposited on each other, is preferable when considering that stability in the amorphous carbon material during cycles and a characteristic of allowing input and output of a large current to easily occur are obtained while retaining an advantage of excellent charge and discharge efficiency in the graphite. It is more preferable that the carbon material have a deposition type in which the amorphous carbon penetrates between particles of graphite that is an aggregate of flat particles.

This carbon material can be obtained by performing the carbonization in a state in which the resin or the resin composition penetrates between the flat particles of the graphite.

The deposition type of the amorphous carbon on the graphite is not particularly limited, and for example, the amorphous carbon may be deposited on a surface of the graphite in a film shape, or the amorphous carbon may be deposited in an island shape. In this embodiment, it is preferable that the amorphous carbon be deposited on the surface of the graphite in an island shape.

«Negative Electrode Material for Secondary Batteries and Lithium Ion Secondary Battery»

Next, a description will be made with respect to an embodiment of a negative electrode material for secondary batteries (hereinafter, also referred to simply as "negative electrode material") of the invention, and a lithium ion secondary battery (hereinafter, also referred to simply as "secondary battery") as an embodiment using the negative electrode material.

FIG. 2 is a schematic diagram illustrating a configuration of an embodiment of a secondary battery.

As shown in FIG. 2, a secondary battery 10 includes a negative electrode 13, a positive electrode 21, an electrolytic solution 16, and a separator 18.

As shown in FIG. 2, the negative electrode 13 includes a negative electrode material 12 and a negative electrode current collector 14.

For example, the negative electrode current collector 14 is constituted by copper foil, nickel foil, and the like.

The negative electrode material 12 is constituted by the carbon material for lithium ion secondary batteries of the invention as described above.

For example, the negative electrode 13 can be manufactured as follows.

1 part by weight to 30 parts by weight of an organic polymer binder (a fluorine-based polymer including polyethylene, polypropylene, and the like, a rubber-like polymer such as a butyl rubber and a butadiene rubber, and the like), and an appropriate amount of a viscosity adjusting solvent (N-methyl-2-pyrrolidone, dimethyl formamide, and the like) are added to 100 parts by weight of the carbon material for lithium ion secondary batteries, and the resultant mixture is kneaded to obtain a mixture in a paste shape. This mixture is molded to have a sheet shape, a pellet shape, and the like by compression molding, roll molding, and the like, thereby obtaining the negative electrode material 12. In addition, the negative electrode material 12 obtained in this manner and the negative electrode current collector 14 are stacked on each other to obtain the negative electrode 13.

In addition, 1 part by weight to 30 parts by weight of an organic polymer binder (a fluorine-based polymer including polyethylene, polypropylene, and the like, a rubber-like polymer such as a butyl rubber and a butadiene rubber, and the like), and an appropriate amount of a viscosity adjusting solvent (N-methyl-2-pyrrolidone, dimethyl formamide, and the like) are added to 100 parts by weight of the carbon material for lithium ion secondary batteries, and the resultant mixture is kneaded to obtain a mixture in a slurry shape. This mixture may be used as the negative electrode material 12, and the negative electrode 13 may also be manufactured by applying and molding the mixture on the negative electrode current collector 14.

The electrolytic solution 16 is filled between the positive electrode 21 and the negative electrode 13, and serves as a layer through which lithium ions migrate during charge and discharge.

As the electrolytic solution 16, a solution obtained by dissolving a lithium salt that is an electrolyte in a nonaqueous solvent is used.

As the nonaqueous solvent, a mixture of cyclic esters such as propylene carbonate, ethylene carbonate, and $\gamma$-butyrolactone; chain esters such as dimethyl carbonate and diethyl carbonate; chain ethers such as dimethoxy ethane; and the like, and the like may be used.

As the electrolyte, a lithium metal salt such as $LiClO_4$ and $LiPF_6$; a tetraalkyl ammonium salt; and the like may be used. In addition, the salts may be mixed with polyethylene oxide, polyacrylonitrile, and the like to be used as a solid electrolyte.

As the separator 18, for example, a porous film such as polyethylene and polypropylene, non-woven fabric, and the like may be used without particular limitation.

As shown in FIG. 2, the positive electrode 21 includes a positive electrode material 20 and a positive electrode current collector 22.

As the positive electrode material 20, for example, a composite oxide such as lithium cobalt oxide ($LiCoO_2$), lithium nickel oxide ($LiNiO_2$), and lithium manganese oxide ($LiMn_2O_4$), a conductive polymer such as polyaniline and polypyrrole, and the like may be used without particular limitation.

As the positive electrode current collector 22, for example, aluminum foil may be used.

In addition, the positive electrode 21 in this embodiment may be manufactured by a method of manufacturing a positive electrode in the related art.

Hereinbefore, the invention has been described on the basis of appropriate embodiments, but the invention is not limited thereto.

Examples

Hereinafter, the invention will be described in detail on the basis of Examples and Comparative Examples, but the invention is not limited thereto. In addition, "part(s)" and "%" described in Examples and Comparative Examples represent "part(s) by weight" and "% by weight", respectively.

First, a measurement method in the following Examples and Comparative Examples will be described.

1. Method of Measuring Positron Lifetime According to Positron Annihilation Method

Electron waves (annihilation $\gamma$-rays), which were generated during positron annihilation, were measured by using a positron and positronium lifetime measuring and nano-void measuring device (manufactured by National Institute of Advanced Industrial Science and Technology) to measure a positron lifetime.

Details thereof are as follows.

(A) Positron source: Positron was generated from electron and positron pair by using an electron accelerator available from Research Institute of Instrumentation Frontier (RIIF) (the electron accelerator irradiated a target (tantalum) with electron beams to cause generation of an electron and positron pair, thereby generating a positron)

(B) Gamma-ray detector: $BaF_2$ scintillator and photomultiplier tube

(C) Measurement temperature and atmosphere: 25°C in vacuo ($1 \times 10^{-5}$ Pa ($1 \times 10^{-7}$ Torr))

(D) Annihilation $\gamma$-ray count number: $3 \times 10^6$ or more

(E) Positron beam energy: 10 keV

(F) Sample size: Powders were applied onto a sample holder (aluminum plate) in a thickness of 0.1 mm

2. Analysis by Laser Raman Spectroscopy

Measurement was performed under the following conditions by using an InVia Reflex Raman microscope manufactured by RENISHAW to calculate an intensity ratio ($R = I_{1360}/I_{1580}$) of a peak intensity ($I_{1360}$) near 1360 cm$^{-1}$ of a Raman spectrum that was observed to a peak intensity ($I_{1580}$) near 1580 cm$^{-1}$ of the Raman spectrum.

(G) Argon ion laser wavelength: 514.5 nm

(H) Laser power on sample: 15 mW to 25 mW

(I) Resolution: 10 cm$^{-1}$ to 20 cm$^{-1}$

(J) Measurement range: 1100 cm$^{-1}$ to 1730 cm$^{-1}$

(K) Analysis of Raman R value and Raman full width at half maximum: Background processing

(L) Smoothing processing: Simple average, convolution 5 points

3. Average Interplanar Spacing ($d_{002}$), and Size (Lc) of Crystallite in c-Axis Direction

The average interplanar spacing was measured by using an X-ray diffraction device "XRD-7000" manufactured by Shimadzu Corporation.

The average interplanar spacing $d_{002}$ was calculated from a spectrum, which was obtained from X-ray diffraction measurement of the carbon material, by the following Bragg's equation.

$$\lambda = 2d_{hkl}\sin\theta \ \ (\text{Bragg's equation})(d_{hkl}=d_{002})$$

$\lambda$: Wavelength of characteristic X-ray K$\alpha$1 output from a negative electrode
$\theta$: Reflection angle of a spectrum

In addition, Lc was measured as follows.

Lc was determined from a diffraction angle and a full width at half maximum of a 002 plane peak in a spectrum obtained from X-ray diffraction measurement by using the following Scherrer's equation.

$$Lc = 0.94\lambda/(\beta\cos\theta) \ \ (\text{Scherrer's equation})$$

Lc: Size of a crystallite
$\lambda$: Wavelength of characteristic X-ray K$\alpha$1 output from a negative electrode
$\beta$: Full width at half maximum (radian) of a peak
$\theta$: Reflection angle of a spectrum

4. Specific Surface Area

The specific surface area was measured according to a BET three-point method in nitrogen adsorption by using Nova-3200 manufactured by Quantachrome Corporation. A specific calculation method is the same as described in the embodiments.

5. Carbon Content and Nitrogen Content

Measurement was performed by using an element analysis and measurement device "PE2400" manufactured by Perkinelmer Co., Ltd. A measurement sample was converted into $CO_2$, $H_2O$, and $N_2$ by using a combustion method, and then the gasified sample was made to pass through a column after homogenization. According to this, these gases were separated step by step, and thus the carbon content, the hydrogen content, and the nitrogen content were measured from respective thermal conductivities.

A) Carbon Content

The amorphous carbon that was obtained was subjected to a drying treatment at 110°C in vacuo for 3 hours, and then a carbon composition ratio was measured by using the element analysis and measurement device.

B) Nitrogen Content

The amorphous carbon that was obtained was subjected to a drying treatment at 110°C in vacuo for 3 hours, and then a nitrogen composition ratio was measured by using the element analysis and measurement device.

6. Charge Capacity, Discharge Capacity, and Charge and Discharge Efficiency

(1) Manufacturing of Bipolar Coin Cell for Evaluation of Secondary Battery

10 parts of polyvinylidene fluoride as a binder and an appropriate amount of N-methyl-2-pyrrolidone as a diluent solvent were added to 100 parts of carbon materials that were obtained in Examples and Comparative Examples, and each of the resultant mixtures was mixed to prepare a slurry-like negative electrode mixture. The slurry-like negative electrode mixture that was prepared was applied to one surface of copper foil having a thickness of 18 $\mu$m, and then

vacuum drying was performed at 110°C for 1 hour. After the vacuum drying, an electrode was compression-molded by a roll press. The electrode was cut in a circular shape having a diameter of 16.156 mm to prepare the negative electrode.

As a counter electrode, lithium metal was used, and evaluation was performed using a bipolar coin cell. As the electrolytic solution, a solution, which was obtained by dissolving lithium hexafluorophosphate in a concentration of 1 mole/liter in a mixed solution of ethylene carbonate and diethyl carbonate with a volume ratio of 1:1, was used.

(2) Evaluation of Charge Capacity and Discharge Capacity

As charge conditions, charge was performed with a constant current of 25 mA/g until reaching 1 mV, retention was performed at 1 mV, and charge was terminated when the current was attenuated to 1.25 mA/g. In addition, a cut-off potential of discharge conditions was set to 1.5 V.

(3) Evaluation of Charge and Discharge Efficiency

The charge and discharge efficiency was calculated by the following Expression on the basis of a value obtained in (2).

$$\text{Charge and discharge efficiency (\%)} = [\text{discharge capacity/charge capacity}] \times 100$$

(4) Large Current Characteristics

On the basis of a value of a discharge capacity obtained in (2), a current value with which discharge was terminated in one hour was set to 1 C, and a ratio [5 C discharge capacity/1 C discharge capacity] of a discharge capacity obtained by performing discharge with a current value of 5 C to a discharge capacity obtained by performing discharge with a current value of 1 C was set as an index of the large current characteristics.

7. Observation of Deposition Shape

A deposition shape of the amorphous carbon onto the graphite was observed by observing a particle cross-section of the negative electrode material with an electron microscope (SEM) and performing element mapping with an electron probe microanalyzer (EPMA).

8. Examples

(Example 1)

A mixed material, which was obtained by adding spheroidized natural graphite to a phenolic resin PR-217 (manufactured by Sumitomo Bakelite Company Limited) as a resin composition in such a manner that 90% of amorphous carbon and 10% of graphite were contained after carbonization, was pulverized and mixed using a ball mill, and then the resultant mixture was sequentially subjected to the following processes (a) to (f) so as to obtain a carbon material in which the amorphous carbon was deposited on the natural graphite.

(a) Temperature rising from room temperature to 500°C at a rate of 100°C/hour without reducing gas substitution, inert gas substitution, reducing gas circulation, and inert gas circulation
(b) Degreasing treatment at 500°C for 2 hours and cooling without reducing gas substitution, inert gas substitution, reducing gas circulation, and inert gas circulation
(c) Fine-Pulverizing with a vibration ball mill
(d) Temperature rising from room temperature to 1200°C at a rate of 100°C/hour under inert gas (nitrogen) substitution and circulation
(e) Carbonization at 1200°C for 8 hours under inert gas (nitrogen) circulation
(f) Natural cooling to 600°C and cooling from 600°C to 100°C or lower at a rate of 100°C/hour under inert gas (nitrogen) circulation

(Examples 2 to 4)

A carbon material was obtained in the same manner as Example 1 except that a blending ratio between the phenolic resin and the graphite was changed in order for the graphite content and the amorphous carbon content to be values shown in Table 1.

(Example 5)

A resin composition (synthesized by the following method) was used instead of the phenolic resin in Example 1.
100 parts of aniline, 697 parts of 37% aqueous formaldehyde solution, and 2 parts of oxalic acid were put into a three-mouth flask provided with a stirrer and a cooling tube, and were allowed to react with each other at 100°C for 3 hours. Then, dehydration was performed to obtain 110 parts of an aniline resin. A weight-average molecular weight of the aniline resin that was obtained was approximately 800.
100 parts of the aniline resin that was obtained as described above and 10 parts of hexamethylenetetramine were pulverized and mixed to obtain a resin composition. A carbon material was obtained by performing a treatment in the same processes as Example 1 by using the resin composition that is obtained instead of the phenolic resin in Example 1.

(Example 6)

The same resin composition as Example 5 was used.
In addition, a carbon material was obtained in the same manner as Example 5 except that the (d) and (e) processes in Example 1 were performed as follows during treatment of the resin composition.

    (d) Temperature rising from room temperature to 1100°C at a rate of 100°C/hour under inert gas (nitrogen) substitution and circulation
    (e) Carbonization at 1100°C for 8 hours under inert gas (nitrogen) circulation

(Comparative Example 1)

A carbon material, which was constituted by graphite (mesocarbon microbeads), was prepared.

(Comparative Example 2)

A carbon material, which was constituted by amorphous carbon obtained by carbonization without containing graphite in Example 1, was prepared.
Results, which were obtained by measuring the graphite content, the amorphous carbon content, the positron lifetime in the amorphous carbon, the Raman spectrum, the average interplanar spacing, the crystallite size, the specific surface area, the carbon content, and the nitrogen content in each of Examples and Comparative Examples, are shown in Table 1.
In addition, the charge capacity, the discharge capacity, and the charge and discharge efficiency in a case of using the carbon material obtained in each of Examples and Comparative Examples as a negative electrode, are also shown in Table 1.

[Table 1]

| | Amorphous carbon | | | | | | | | Graphite content B | A/B ratio | Charge capacity | Discharge capacity | Charge and discharge efficiency | 5 C discharge capacity/ 1 C discharge capacity |
| | Content A | Positron lifetime | Raman intensity ratio R | $d_{002}$ | Lc | Specific surface area | Carbon content | Nitrogen content | | | | | | |
| | [% by weight] | [Ps] | [eV] | [Å] | [Å] | [m²/g] | [% by weight] | [% by weight] | [% by weight] | | [mAh/g] | [mAh/g] | [%] | |
| Example 1 | 90 | 408 | 1.02 | 3.78 | 9.99 | 7 | 97.5 | 0.9 | 10 | 9.0 | 493 | 425 | 86 | 0.90 |
| Example 2 | 95 | 408 | 1.02 | 3.78 | 9.99 | 7 | 97.5 | 0.9 | 5 | 19.0 | 530 | 453 | 85 | 0.88 |
| Example 3 | 80 | 408 | 1.02 | 3.78 | 9.99 | 7 | 97.5 | 0.9 | 20 | 4.0 | 458 | 396 | 86 | 0.91 |
| Example 4 | 60 | 408 | 1.02 | 3.78 | 9.99 | 7 | 97.5 | 0.9 | 40 | 1.5 | 455 | 396 | 87 | 0.80 |
| Example 5 | 90 | 446 | 0.90 | 3.64 | 11.4 | 5 | 96.5 | 1.6 | 10 | 9.0 | 422 | 371 | 88 | 0.90 |
| Example 6 | 90 | 404 | 1.00 | 3.66 | 10.7 | 6 | 95.0 | 2.9 | 10 | 9.0 | 457 | 386 | 85 | 0.83 |
| Comparative Example 1 | - | - | - | - | - | - | - | - | 100 | - | 290 | 276 | 94 | 0.57 |
| Comparative Example 2 | 100 | 408 | 1.1 | 3.78 | 9.99 | 7 | 97.5 | 0.9 | - | - | 483 | 377 | 78 | 0.97 |

As can be seen from Table 1, in lithium ion secondary batteries using the carbon material obtained by adding the graphite to the amorphous carbon, the charge and discharge efficiency was high, and the input and output characteristics of a large current were excellent. In contrast, in Comparative Examples, it was difficult to obtain sufficient results.

In addition, from observation of the particle cross-section of the negative electrode material with the electron microscope (SEM) and element mapping with the EPMA, it could be confirmed that in the negative electrode material obtained in Examples, the amorphous carbon was deposited on a surface of the natural graphite in an island shape.

Hereinafter, examples of reference aspects will be additionally described.

[1] A carbon material for lithium ion secondary batteries which is used in the lithium ion secondary batteries, containing:

amorphous carbon and graphite as a main material.

[2] The carbon material for lithium ion secondary batteries according to [1],
wherein when the amorphous carbon content is set to A [% by weight] and the graphite content is set to B [% by weight], a relationship of $1.2 \leq A/B \leq 100$ is satisfied.
[3] The carbon material for lithium ion secondary batteries according to [1] or [2],
wherein the amorphous carbon content is 55% by weight to 99% by weight.
[4] The carbon material for lithium ion secondary batteries according to any one of [1] to [3],
wherein the graphite content is 1% by weight to 45% by weight.
[5] The carbon material for lithium ion secondary batteries according to any one of [1] to [4],
wherein a positron lifetime of the amorphous carbon, which is measured by a positron annihilation method under the following conditions (A) to (E), is more than or equal to 370 picoseconds and less than or equal to 480 picoseconds,

(A) Positron source: Positron is generated from an electron and positron pair by using an electron accelerator,
(B) Gamma-ray detector: $BaF_2$ scintillator and photomultiplier tube,
(C) Measurement temperature and atmosphere: 25°C in vacuo,
(D) Annihilation $\gamma$-ray count number: $3 \times 10^6$ or more, and
(E) Positron beam energy: 10 keV, and

an intensity ratio ($R=I_{1360}/I_{1580}$) of a peak intensity ($I_{1360}$) near 1360 cm$^{-1}$ of a Raman spectrum observed by laser Raman spectroscopy to a peak intensity ($I_{1580}$) near 1580 cm$^{-1}$ of the Raman spectrum is more than or equal to 0.80 and less than or equal to 1.20.
[6] The carbon material for lithium ion secondary batteries according to any one of [1] to [5],
wherein the amorphous carbon is obtained by carbonizing a resin or a resin composition.
[7] The carbon material for lithium ion secondary batteries according to [6],
wherein the carbon material is obtained by mixing the resin or the resin composition and the graphite and carbonizing the resultant mixture.
[8] A negative electrode material for lithium ion secondary batteries, including:

the carbon material for lithium ion secondary batteries according to any one of [1] to [7].

[9] A lithium ion secondary battery,
wherein the negative electrode material for lithium ion secondary batteries according to [8] is used.

Priority is claimed on Japanese Patent Application Publication No. 2012-059958, filed March 16, 2012, the content of which is incorporated herein by reference.

**Claims**

1. A carbon material for lithium ion secondary batteries, which is used in the lithium ion secondary batteries, the carbon material containing:

amorphous carbon; and
graphite,
wherein the amorphous carbon is deposited on a surface of the graphite,
the amorphous carbon content is 55% by weight to 99% by weight, and

the graphite content is 1% by weight to 45% by weight.

2. The carbon material for lithium ion secondary batteries according to claim 1,
   wherein the amorphous carbon is obtained by carbonizing a resin or a resin composition.

3. The carbon material for lithium ion secondary batteries according to claim 2,
   wherein the carbon material is obtained by mixing the resin or the resin composition and the graphite and carbonizing the resultant mixture.

4. The carbon material for lithium ion secondary batteries according to claim 3,
   wherein the graphite is an assembly of flat particles, and
   the carbon material is obtained by the carbonization in a state in which the resin or the resin composition penetrates between the flat particles of the graphite.

5. The carbon material for lithium ion secondary batteries according to any one of claims 1 to 4,
   wherein a positron lifetime of the amorphous carbon, which is measured by a positron annihilation method under the following conditions (A) to (E), is more than or equal to 370 picoseconds and less than or equal to 480 picoseconds,

   (A) Positron source: Positron is generated from an electron and positron pair by using an electron accelerator,
   (B) Gamma-ray detector: $BaF_2$ scintillator and photomultiplier tube,
   (C) Measurement temperature and atmosphere: 25°C in vacuo,
   (D) Annihilation $\gamma$-ray count number: $3\times10^6$ or more, and
   (E) Positron beam energy: 10 keV, and

   an intensity ratio ($R=I_{1360}/I_{1580}$) of a peak intensity ($I_{1360}$) near 1360 cm$^{-1}$ of a Raman spectrum observed by laser Raman spectroscopy to a peak intensity ($I_{1580}$) near 1580 cm$^{-1}$ of the Raman spectrum is more than or equal to 0.80 and less than or equal to 1.20.

6. A negative electrode material for lithium ion secondary batteries, comprising:

   the carbon material for lithium ion secondary batteries according to any one of claims 1 to 5.

7. A lithium ion secondary battery,
   wherein the negative electrode material for lithium ion secondary batteries according to claim 6 is used.

FIG. 1

FIG. 2

10

## INTERNATIONAL SEARCH REPORT

| International application No. |
|---|
| PCT/JP2013/001524 |

**A. CLASSIFICATION OF SUBJECT MATTER**
*H01M4/587*(2010.01)i, *C01B31/02*(2006.01)i, *C01B31/04*(2006.01)i, *H01M4/36* (2006.01)i

According to International Patent Classification (IPC) or to both national classification and IPC

**B. FIELDS SEARCHED**

Minimum documentation searched (classification system followed by classification symbols)
H01M4/587, C01B31/02, C01B31/04, H01M4/36

Documentation searched other than minimum documentation to the extent that such documents are included in the fields searched
Jitsuyo Shinan Koho     1922-1996    Jitsuyo Shinan Toroku Koho    1996-2013
Kokai Jitsuyo Shinan Koho    1971-2013    Toroku Jitsuyo Shinan Koho    1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-312790 A  (Toyota Motor Corp.), 24 November 1998 (24.11.1998), claim 1; paragraph [0020] (Family: none) | 1-7 |
| X | JP 2004-303674 A  (Hitachi, Ltd.), 28 October 2004 (28.10.2004), claim 1; paragraph [0018] (Family: none) | 1-7 |
| X | WO 2007/086603 A1  (Tokai Carbon Co., Ltd.), 02 August 2007 (02.08.2007), claims 1, 2 & US 2009/0004569 A1     & EP 1981104 A1 | 1-7 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 March, 2013 (28.03.13) | 09 April, 2013 (09.04.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 827 414 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006083012 A
- JP 5074457 A
- JP 2012059958 A